(19) Europäisches Patentamt
European Patent Office
Office européen des brevets

(11) **EP 1 946 147 B1**

(12) **EUROPEAN PATENT SPECIFICATION**

(45) Date of publication and mention
of the grant of the patent:
**08.04.2015 Bulletin 2015/15**

(51) Int Cl.:
***G01S 13/75*** *(2006.01)*

(21) Application number: **06804702.6**

(86) International application number:
**PCT/CA2006/001829**

(22) Date of filing: **09.11.2006**

(87) International publication number:
**WO 2007/053941 (18.05.2007 Gazette 2007/20)**

(54) **SHORT-DISTANCE RANGING SYSTEM**

ENTFERNUNGSBESTIMMUNGSSYSTEM FÜR KURZE DISTANZEN

SYSTEME DE TELEMETRIE COURTE PORTEE

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.11.2005 US 735036 P**

(43) Date of publication of application:
**23.07.2008 Bulletin 2008/30**

(73) Proprietor: **NovAtel Inc.
Calgary,
Alberta T2E 8S5 (CA)**

(72) Inventor: **FELLER, Walter J.
Airdrie, Alberta T4B 1P7 (CA)**

(74) Representative: **Rupprecht, Kay et al
Meissner, Bolte & Partner GbR
Widenmayerstraße 47
80538 München (DE)**

(56) References cited:
**EP-A- 0 409 016       WO-A1-2005/114593
CA-A1- 2 268 951       CA-A1- 2 268 951
CA-A1- 2 380 672       CA-A1- 2 380 672
US-A- 6 157 321        US-A- 6 157 321**

Remarks:
The file contains technical information submitted after the application was filed and not included in this specification

**Description**

BACKGROUND OF THE INVENTION

Field of the Invention

This invention relates to the determination of the distance from a primary location to the location of the nearby object. More particularly, it relates to the use of a radio- frequency ranging signal to obtain the distance from the primary location to a transponder located nearby.

Background Information

For the measurement of relatively short ranges, laser ranging devices are the most commonly used. However, these devices are too cumbersome and expensive for many applications. Also they are unsuitable for use in situations where simultaneous measurement of ranges to multiple objects is desired. Further, optical signals can be obscured by foliage or other optically intervening objects, or greatly diminished by fog. The present invention is a response to these shortcomings.

U.S. Patent No. 6,157,321 discloses a data acquisition system where a first communication device transmits a transmitted signal to a second communication device. The second communication device encodes the transmitted signal with a code generating a retransmitted signal. The retransmitted signal is then transmitted back to the first communication device. The code can be indicative of an environmental element, such as a traffic sign. The first communication device can determine a distance to the environmental element by monitoring a time for the retransmitted signal to arrive. The first communication device can also encode the transmitted signal with information, such as voice.

CA Patent No. 2380672 discloses a plurality of radio frequency passive transponders that are attached to an animal's organ, such as the heart. Each passive transponder may be attached to the surface of the organ or mounted on a stent that is implanted in a blood vessel of the organ. An interrogator periodically sends an signal to each passive transponder which reacts by transmitting a reply signal. The interrogator processes the reply signals to derive information regarding activity of the organ. In one embodiment, the position of each passive transponder is determined from the reply signals, thereby enabling information about organ movement and volume change to be derived. In another embodiment, data from a sensor on the passive transponder is sent via the reply signal.

CA Patent No. 2268951 discloses a system for tracking mobile tags. Cell controllers with multiple antenna modules generate a carrier signal which is received by the tags. Tags shift the frequency of the carrier signal, modulate an identification code onto it, and transmit the resulting tag signal at randomized intervals. The antennas receive and process the response, and determine the presence of the tags by proximity and triangulation. Distance of a tag from an antenna is calculated by measuring the round trip signal time. The cell controllers send data from the antenna to a host computer. The host computer collects the data and resolves them into positional estimates. Data is archived in a data warehouse, such as an SQL Server.

EP Patent Publication No. 0409016 discloses a locating system for locating predetermined labeled objects that includes a transceiver unit which comprises a narrow beamwidth antenna means for transmitting an energizing signal at a predetermined first frequency and for receiving a returned signal at a predetermined second frequency from an object to be located, the energizing signal incorporating a predetermined transponder identification code. A plurality of label-like transponders is provided, each of which is affixable to an object to be located, each transponder including logic circuitry in order that only that transponder to which the said identification code relates is energized by the energizing signal to radiate the returned signal.

CA 2380672 describes a very simple way of passive RFID tag tracking. The distance between the interrogator and the passive RFID tag needs to be very short. The given approach is neither precise nor capable of handling multiple RFID tags operating on the same frequency.

Starting from this prior art it is an objective of the present invention to provide an improved method and system for determining the range between an interrogator and a plurality of transponders.

The objective is solved by the method according to claim 1 and the system according to claim 3.

BRIEF DESCRIPTION OF THE DRAWINGS

The invention description below refers to the accompanying drawings, of which:

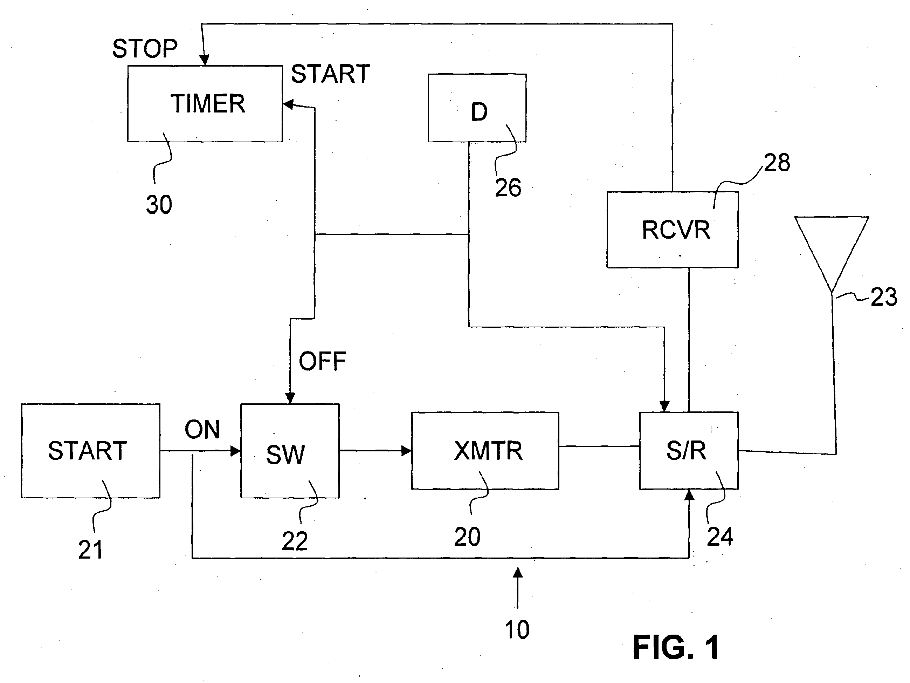

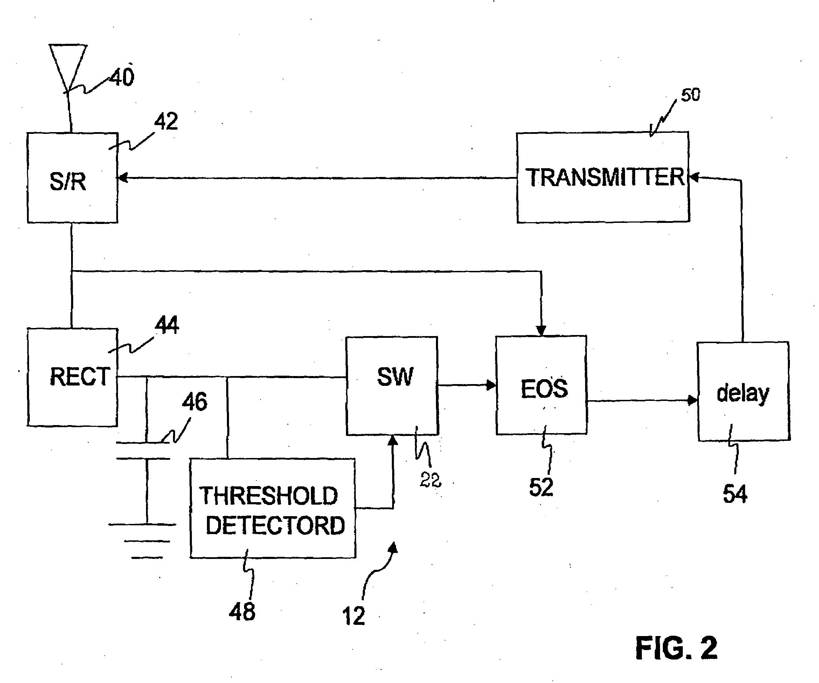

Fig. 1 is a diagram of an interrogation unit incorporating the invention; and Fig. 2 is a diagram of a transponder incorporating the invention.

DETAILED DESCRIPTION OF AN ILLUSTRATIVE EMBODIMENT

As shown in the drawing, a ranging system incorporating the invention includes an interrogation unit 10 (Fig. 1) and a transponder 12 (Fig. 2) whose distance from the interrogation unit is to be determined. The interrogation unit includes a transmitter 20 which, upon initiation of a range determination by a start button 21 by way of a switch 22, transmits an RP output over an antenna 23 by way of a send/receive switch 24, positioned by the start button 21. At the end of a predetermined interval, e.g. one second, a delay unit 26 turns off the transmitter, causes the switch 24 to connect the antenna 23 to a receiver 28 and starts a timer 30. The interrogator unit also includes a micro processor and associated memory, or an ASIC, neither of which is shown herein, that perform some of the functions described herein, including, for example, those of the delay unit 26 and timer 30.

With reference to Fig. 2, the transponder 12 includes an antenna 40, connected to a send/receive switch 42 which, in its depicted configuration, passes the incoming signal to a rectifier 44. The output of the rectifier, in turn, charges a power capacitor 46. A threshold detector 48 senses the rise of the capacitor voltage above a predetermined threshold, upon which it connects the capacitor to an end-of-signal detector 52, which is a receiver tuned to the frequency of the signal transmitted by the interrogation unit 10.

When the detector 52 senses the termination of the incoming signal, it initiates a known delay interval provided by a delay unit 54. At the end of the delay interval, the delay unit output turns on a transmitter 50 and changes the position of the switch 42 to connect the transmitter 50 to the antenna 40.

At the interrogation unit 10 the receiver 28 receives the signal transmitted by the responder and stops the timer 30, which thus records the round trip time from the cessation of the transmission by the transmitter 20 and the receipt of the response from the transponder 12. The range to the transponder is calculated by subtracting the delay interval in the transponder from the content of the timer 30 to provide the total atmospheric portion of the RF roundtrip. The distance from the interrogation unit to the transmitter is thus one-half the atmospheric portion of the round trip time, divided by the speed of light (c).

The transmission interval provided by the delay unit 26 in the scanner should be long enough to provide sufficient charge on the power capacitor 46 for operation of the transponder. The delay provided by the transponder delay unit 54 is preferably substantially longer than any delay in the detector 52. The power PR in milliwatts, received by the transponder 12 is given by:

$$PR = 0.001 \text{ (loss over 1 meter)} * \text{(gain in antenna 23)} * \text{(gain in antenna 40)} * 1000 \, Pt/R^2$$

Where

PT is the transmitter 20 output power in watts, and
R is the range in meters from the interrogation unit 10 to the transponder 12.

Assume, for example, that the transmitter 20 has a power of 2 W, the gain of the antenna 23 is 6dBi (a factor of 4), and the gain of the transponder antenna 40 is OdBi. For a range of 8 meters this would result in a received power, Pr, of 0.063 mW, corresponding with 0.1535V, given a free space impedance of 377 ohms.

Assume also a 20% efficiency in the circuitry that charges and discharges the power capacitor 46. This will provide a charging current of only about 10 uA for one second. However the transponder will transmit for about 1 msec and the capacitor 46 can thus provide ~10 mA at 1.2 volts for that interval. If the transmitter 50 is 20% efficient, it will transmit 2.4 mW of power.

With an 8-meter range, the interrogator will then receive - 0.15 [mu]W (-38 dBm) of power, which is well above the thermal noise level, the thermal noise being -174 dBm/Hz, and assuming the transmitter is receiving all 1 ms of the transmission the thermal noise will be -144 dBm. This is far lower than the possible received power, so even with a high noise figure the receiver will have no problem detecting the signal.

The invention can easily be extended to the measurement of ranges to multiple transponders by using different, known delays in each of the transponders. For example, with a maximum range of eight meters and thus a round trip atmospheric propagation time of up to 54 nsec the first transponder might have an internal delay of 1 [mu]sec, readily generated with acoustic wave devices, the second might have a delay of 2 [mu]sec, the third a delay of 3 [mu]sec, and so on. The interrogator can then easily separate the return signals from the transponders by means of the time slots in which they arrive.

Also, each transponder may transmit a unique code identifying the transponder to the interrogator. It may also transmit on a different frequency from the frequencies of the other transponder, the frequency being used to identify the transponder to the interrogation unit.

**Claims**

1. A method of determining the range from an interrogator to one or more transponders, the method comprising the steps of:

   A. in the interrogator transmitting an interrogation RF carrier for a selected interval;
   B. in each transponder

      (1) receiving the carrier, rectifying it, and
      (2) charging a power capacitor with the rectified carrier;
      (3) when the power capacitor has power above a predetermined threshold powering a detector,

   C. in the interrogator, terminating the transmission of the interrogation RF carrier at the end of the selected interval and starting a timer;
   D. in each transponder:

      1) sensing by the detector of a cessation of the incoming interrogation RF carrier and starting a delay interval, and
      2) at the end of the delay interval transmitting an RF response;

   E. in the interrogator:

      1) receiving the RF responses, and
      2) calculating the distance to each transponder from the elapsed time between the cessation of transmission of the interrogation RF carrier and the receipt of the RF responses from the respective transponders as determined by the timer and from the delays associated with the responses from the respective transponders, wherein
      a first one of the transponders transmits its RF response after a basic delay interval, substantially greater than the round trip RF propagation time between the interrogator and the transponder, and
      the other transponders have delay intervals that are different multiples of the basic delay interval.

2. The method of claim 1 in which each transponder includes in its response an identification of the transponder.

3. A system for determining the range from an interrogator to one or more transponders, the system comprising;

   A. in the interrogator (10), a transmitter (20) for transmitting an interrogation RF carrier;
   B. in each transponder (12), means (40, 44) for

      1) receiving the RF carrier,
      2) rectifying the received carrier,
      3) charging a power capacitor (46) with the rectified carrier, and
      4) when the power capacitor (46) has power above a predetermined threshold powering a detector (52);

   C. in the interrogator means (26) for

      1) terminating the transmission of the RF carrier, and
      2) starting a timer (30);

   D. in each transponder (12)

      1) the detector (52) sensing the cessation of the incoming RF carrier and starting a delay interval, and
      2) a transmitter (50) for transmitting an RF response at the end of the delay interval; and

   E. in the interrogator (10)

      1) means (28) for receiving the RF responses, and
      2) means for calculating the distance to each transponder from the elapsed time as determined by the timer (30) between the cessation of the transmission of the RF carrier and the receipt of the RF responses from the respective transponders, and the delay intervals at the respective transponders (12), wherein
a first one of the transponders transmits its RF response after a basic delay interval, substantially greater than the round trip RF propagation time between the interrogator and the transponder, and
the other transponders have delay intervals that are different multiples of the basic delay interval.

**Patentansprüche**

1. Verfahren zum Bestimmen der Reichweite von einem Abfragesender zu einem oder mehreren Antwortsendern, wobei das Verfahren die Schritte umfasst:

A. im Abfragesender, das Übermitteln eines Abfrage-Hochfrequenzträgers für ein ausgewähltes Intervall;
B. in jedem Antwortsender

(1) Empfangen des Trägers, Gleichrichten desselben, und
(2) Laden eines Leistungskondensators mit dem gleichgerichteten Träger;
(3) einen Detektor mit Leistung versorgen, wenn der Leistungskondensator Leistung oberhalb eines vorgegebenen Schwellenwertes besitzt;

C. in dem Abfragesender, Beenden der Übermittlung des Abfrage-Hochfrequenzträgers am Ende des ausgewählten Intervalls und Starten eines Impulszeitreglers;
D. in jedem Antwortsender:

1) Abtasten durch den Detektor einer Einstellung des ankommenden Abfrage-Hochfrequenzträgers und Starten eines Verzögerungsintervalls, und
2) am Ende des Verzögerungsintervalls Übermitteln einer Hochfrequenzantwort;

E. in dem Abfragesender:

1) Empfangen der Hochfrequenzantworten, und
2) Berechnen der Entfernung zu jedem Antwortsender aus der verstrichenen Zeit zwischen der Einstellung einer Übermittlung des Abfrage-Hochfrequenzträgers und dem Empfang der Hochfrequenzantworten von den jeweiligen Antwortsendern, wie durch den Impulszeitregler bestimmt, und aus den Verzögerungen, die den Antworten von den jeweiligen Antwortsendern zugeordnet sind, wobei

ein erster der Antwortsender seine Hochfrequenzantwort nach einem elementaren Verzögerungsintervall sendet, das im Wesentlichen größer ist als die Hochfrequenzausbreitungsumlaufzeit zwischen dem Abfragesender und dem Antwortsender,
und
die anderen Antwortsender Verzögerungsintervalle besitzen, die unterschiedliche Vielfache des elementaren Verzögerungsintervalls sind.

2. Verfahren nach Anspruch 1, bei dem jeder Antwortsender in seiner Antwort eine Kennung des Antwortsenders enthält.

3. System zum Bestimmen der Reichweite von einem Abfragesender zu einem oder mehreren Antwortsendern, wobei das System umfasst:

A. in dem Abfragesender (10), einen Sender (20) zum Übermitteln eines Abfrage-Hochfrequenzträgers;
B. in jedem Antwortsender (12), Einrichtungen (40, 44) zum

1) Empfangen des Hochfrequenzträgers,
2) Gleichrichten des empfangenen Trägers,
3) Laden eines Leistungskondensators (46) mit dem gleichgerichteten Träger, und
4) einen Detektor (52) mit Leistung versorgen, wenn der Leistungskondensator (46) eine Leistung oberhalb eines vorgegebenen Schwellenwertes besitzt;

C. in der Abfragesendereinrichtung (26) zum

1) Beenden der Übermittlung des Hochfrequenzträgers, und
2) Starten eines Impulszeitreglers (30);

D. in jedem Antwortsender (12)

1) den Detektor (52), der die Einstellung des ankommenden Hochfrequenzträgers abtastet und ein Verzögerungsintervall startet, und
2) einen Sender (50) zum Übermitteln einer Hochfrequenzantwort am Ende des Verzögerungsintervalls; und

E) in dem Abfragesender (10)

1) Einrichtungen (28) zum Empfangen der Hochfrequenzantworten, und
2) Einrichtungen zum Berechnen der Entfernung zu jedem Antwortsender aus der durch den Impulszeitregler (30) bestimmten, verstrichenen Zeit zwischen der Einstellung der Übermittlung des Hochfrequenzträgers und dem Empfang der Hochfrequenzantworten von den jeweiligen Antwortsendern, und der Verzögerungsintervalle an den jeweiligen Antwortsendern (12), wobei

ein erster der Antwortsender seine Hochfrequenzantwort nach einem elementaren Verzögerungsintervall übermittelt, das im Wesentlichen größer ist als die Hochfrequenzausbreitungsumlaufzeit zwischen dem Abfragesender und dem Antwortsender, und
die anderen Antwortsender Verzögerungsintervalle aufweisen, die unterschiedliche Vielfache des elementaren Verzögerungsintervalls sind.

**Revendications**

1. Procédé pour déterminer la distance depuis un interrogateur jusqu'à un ou plusieurs transpondeurs, le procédé comprenant les étapes consistant à :

A) dans l'interrogateur, transmettre une porteuse d'interrogation à radiofréquences (RF) pendant un intervalle sélectionné ;
B) dans chaque transpondeur

1) recevoir la porteuse, la rectifier, et
2) charger une capacité de puissance avec la porteuse rectifiée ;
3) quand la capacité de puissance présente une puissance au-dessus d'un seuil prédéterminé, alimenter un détecteur en puissance,

C) dans l'interrogateur, terminer la transmission de la porteuse d'interrogation RF à la fin de l'intervalle sélectionné et démarrer un temporisateur ;
D) dans chaque transpondeur :

1) détecter au moyen du détecteur la cessation de la porteuse d'interrogation RF incidente et démarrer un intervalle de retard, et
2) à la fin de l'intervalle de retard, transmettre une réponse RF ;

E) dans l'interrogateur :

1) recevoir les réponses RF, et
2) calculer la distance à chaque transpondeur à partir du temps écoulé entre la cessation de la transmission de la porteuse d'interrogation RF et la réception des réponses RF depuis les transpondeurs respectifs, tel que déterminé par le temporisateur, et à partir des retards associés aux réponses depuis les transpondeurs respectifs, dans lequel

un premier des transpondeurs transmet sa réponse RF après un intervalle de retard de base, sensiblement plus grand que le temps de propagation aller-retour RF entre l'interrogateur et le transpondeur, et
les autres transpondeurs ont des intervalles de retard qui sont des multiples différents de l'intervalle de retard de base.

**2.** Procédé selon la revendication 1, dans lequel chaque transpondeur inclut dans sa réponse une identification du transpondeur.

**3.** Système pour déterminer la distance depuis un interrogateur jusqu'à un ou plusieurs transpondeurs, le système comprenant :

A) dans l'interrogateur (10), un émetteur (20) pour émettre une porteuse d'interrogation à radiofréquences (RF) ;
B) dans chaque transpondeur (12), des moyens (40, 44) pour

1) recevoir la porteuse RF,
2) rectifier la porteuse reçue,
3) charger une capacité de puissance (46) avec la porteuse rectifiée, et
4) quand la capacité de puissance (46) présente une puissance au-dessus d'un seuil prédéterminé, alimenter un détecteur (52) en puissance ;

C) dans l'interrogateur, des moyens (26) pour

1) terminer la transmission de la porteuse RF, et
2) démarrer un temporisateur (30) ;

D) dans chaque transpondeur (12)

1) le détecteur (52) détecte la cessation de la porteuse RF incidente et démarre un intervalle de retard, et
2) un émetteur (50) pour émettre une réponse RF à la fin de l'intervalle de retard ; et

E) dans l'interrogateur (10)

1) des moyens (28) pour recevoir les réponses RF, et
2) des moyens pour calculer la distance à chaque transpondeur à partir du temps écoulé tel que déterminé par le temporisateur (30) entre la cessation de la transmission de la porteuse RF et la réception des réponses RF depuis les transpondeurs respectifs, et les intervalles de retard au niveau des transpondeurs respectifs (12), dans lequel

un premier des transpondeurs transmet la réponse RF après un intervalle de retard de base, sensiblement plus grand que le temps de propagation aller-retour RF entre l'interrogateur et le transpondeur, et
les autres transpondeurs ont des intervalles de retard qui sont des multiples différents de l'intervalle de retard de base.

**FIG. 1**

EP 1 946 147 B1

**FIG. 2**

**EP 1 946 147 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6157321 A
- CA 2380672
- CA 2268951
- EP 0409016 A